# EUROPEAN PATENT APPLICATION

(11) **EP 4 793 831 A1**
(43) Date of publication of application: **19.08.2026**
(21) Application number: 26157489.1
(22) Date of filing: 10.02.2026
(51) Int. Cl.: G06N 3/045, G06N 20/00

(54) **SYSTEMS AND METHODS FOR GENERATING RELIABLE LANGUAGE MODEL OUTPUTS USING UNCERTAINTY QUANTIFICATION**

(30) Priority: 14.02.2025 US 202519054291
(71) Applicant: Capital One Services, LLC, McLean, Virginia 22102 (US)
(72) Inventor: YIN, Youbing, McLean, VA 22102 (US); ZHU, Jing, McLean, VA 22102 (US); WOLFE, Nathan, McLean, VA 22102 (US); BABINSKY, Erin, McLean, VA 22102 (US); HONG, Spencer, McLean, VA 22102 (US)
(74) Representative: Boult Wade Tennant LLP

(57) **Abstract**

A device may obtain a plurality of responses of a language model to a prompt, where each of the plurality of responses comprises a binary response portion and a reasoning portion. The device may determine an uncertainty quantification for the language model based on the plurality of responses. The uncertainty quantification may be based on variations across reasoning portions of the plurality of responses, or variations in binary option confidences in binary response portions of the plurality of responses. The device may output the binary response portion of one of the plurality of responses based on the uncertainty quantification indicating certainty in the plurality of responses, or an uncertainty indication based on the uncertainty quantification indicating uncertainty in the plurality of responses.

## Description

### BACKGROUND

In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. First, artificial intelligence may rely on large amounts of high-quality data. The process for obtaining this data and ensuring it is high-quality can be complex and time-consuming. Additionally, data that is obtained may need to be categorized and labeled accurately, which can be difficult, time-consuming and a manual task. Second, despite the mainstream popularity of artificial intelligence, practical implementations of artificial intelligence may require specialized knowledge to design, program, and integrate artificial intelligence-based solutions, which can limit the amount of people and resources available to create these practical implementations. Finally, results based on artificial intelligence can be difficult to review as the process by which the results are made may be unknown or obscured. This obscurity can create hurdles for identifying errors in the results, as well as improving the models providing the results. These technical problems may present an inherent problem with attempting to use an artificial intelligence-based solution in achieving highly reliable language model outputs.

### SUMMARY

Methods and systems are described herein for novel uses and/or improvements to artificial intelligence applications. As one example, methods and systems are described herein for improving the reliability of an output generated by a language model.

Existing systems are susceptible to model hallucinations and other "guessing" that result in outputs that lack certainty and reliability. The problem of model hallucinations or guessing may be exacerbated when a binary output (e.g., "yes" or "no") is requested from a model due to the lack of contextual clues or other indicators pointing to model uncertainty. Existing systems may attempt to estimate uncertainty directly on a model's output, which has limited scope and ignores the underlying decision-making processes or reasoning of the model. Accordingly, such approaches fail to accurately and consistently detect uncertainty in a model, thereby resulting in the model more frequently producing outputs that are unreliable. These unreliable outputs may result in excessive back-and-forth communication between the model and a requesting device, thereby increasing the consumption of computing resources and/or computer network resources. However, the difficulty in adapting artificial intelligence models to achieve greater reliability faces several technical challenges, such as the inability to determine the underlying decision-making processes or reasoning of a model and/or the inability consistently and accurately quantify the uncertainty present in a model.

To overcome these technical deficiencies in adapting artificial intelligence models, methods and systems disclosed herein facilitate accurate detection of uncertainty in a model (e.g., detection of model guessing) based on the underlying decision-making processes or reasoning of the model, thereby improving the reliability of the model's outputs. In some examples, the system may improve the reliability of the model's outputs by determining an uncertainty quantification (e.g., a measurement or value estimating a degree of uncertainty) based on variations in the reasoning given by the model across multiple outputs responding to the same or similar input prompts (e.g., prompts requesting a binary output). This technique uses the model's tendency to provide the same or similar reasoning across the multiple outputs when the model is more certain, and conversely, the model's tendency to provide different reasoning across the multiple outputs when the model is less certain. Thus, by detecting an amount of variation in the model's reasoning, the system may ascertain a degree of the model's certainty. Additionally, or alternatively, the system may improve the reliability of the model's outputs by determining an uncertainty quantification based on a variation between binary option confidences computed by the model (e.g., a confidence of the model in a "yes" response versus a confidence of the model in a "no" response) for a binary response portion (e.g., an initial output token) of a response output. This technique uses the model's tendency to compute highly differing confidence scores for binary options when the model is more certain, and conversely, the model's tendency to compute similar confidence scores for the binary options when the model is less certain. Thus, by detecting a variation between the computed confidence scores for binary options, the system may ascertain a degree of the model's uncertainty. Using these uncertainty quantification techniques, the system may produce outputs of the model in which the system has determined a high degree of model certainty, while suppressing or replacing outputs of the model in which the system has determined a low degree of model certainty, thereby improving an overall reliability of the model. In this way, the system may reduce back-and-forth communication between the model and a requesting device, thereby conserving computing resources and/or computer network resources.

In some aspects, a system may receive, from a user device via a user interface, an input indicating a prompt for a language model. The system may determine, using a classification model, a classification of the prompt as a first prompt type that requests binary response or as a second prompt type that requests nonbinary response. The system may generate, based on the classification of the prompt as the first prompt type, a plurality of responses to the prompt sampled from a probability distribution of the language model, where each of the plurality of responses comprises a binary response portion and a reasoning portion. The system may extract reasoning portions from the plurality of responses. The system may decompose each of the reasoning portions into one or more claims to obtain a plurality of claims. The system may determine pairwise entailment probabilities for each pair of the plurality of claims. The system may construct a matrix using the pairwise entailment probabilities, where each cell of the matrix represents entailment between a pair of the plurality of claims. The system may perform, using the matrix, a clustering of the plurality of claims into one or more reasoning groups. The system may determine an uncertainty quantification for the language model based on the clustering of the plurality of claims into the one or more reasoning groups. The system may cause, based on the uncertainty quantification indicating certainty in the plurality of responses, outputting of at least the binary response portion of one of the plurality of responses in the user interface.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for generating reliable language model outputs using uncertainty quantification, in accordance with one or more embodiments.
FIG. 2A shows an illustrative diagram for determining an uncertainty quantification for a language model, in accordance with one or more embodiments.
FIG. 2B shows an illustrative diagram for determining an uncertainty quantification for a language model, in accordance with one or more embodiments.
FIG. 3 shows illustrative components for a system used to detect certainty or uncertainty in language model outputs, in accordance with one or more embodiments.
FIG. 4 shows a flowchart of the steps involved in detecting certainty or uncertainty in language model outputs, in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

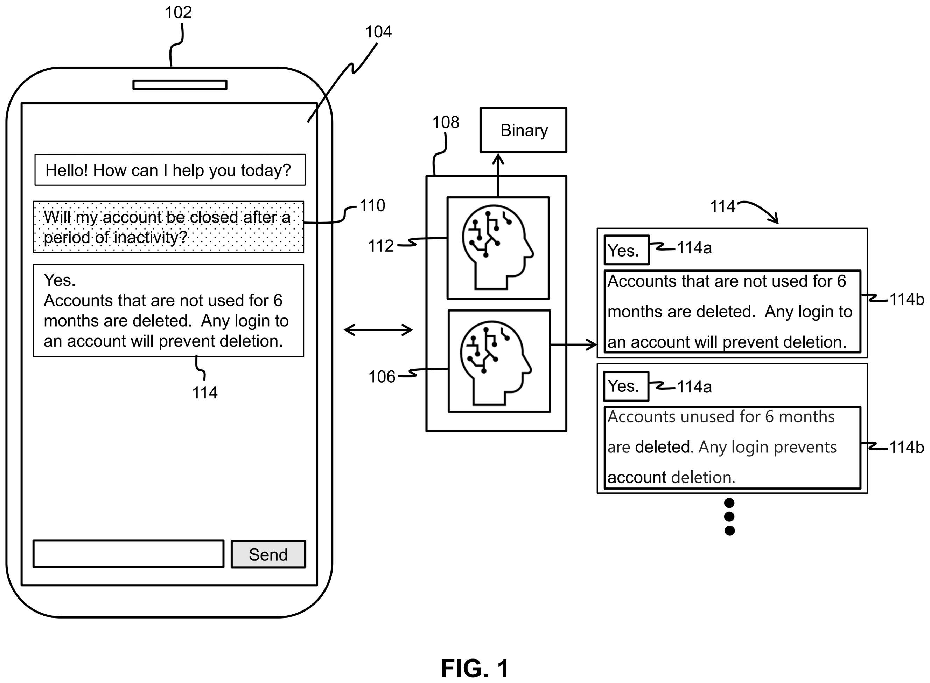

FIG. 1 shows an illustrative diagram for generating reliable language model outputs using uncertainty quantification, in accordance with one or more embodiments. As shown in FIG. 1, a user device 102 may include a user interface 104 that facilitates communication with a language model 106. For example, the language model 106 may be implemented at a resource (e.g., a server, a cloud service, an application, an application programming interface (API) endpoint) of a system 108, and the user interface 104 may facilitate communication to and from the resource. In some embodiments, communication with the resource (e.g., an API endpoint) may be in the form of requests and responses via an API. The system 108 may be remote from the user device 102 (e.g., the system 108 may be one or more servers, a cloud computing system, or the like), or the user device 102 may include the system 108. As referred to herein, a "user interface" may comprise a human-computer interaction and communication in a device, and may include display screens, keyboards, a mouse, and the appearance of a desktop. For example, a user interface may comprise a way a user interacts with an application or a website. In some embodiments, the user interface 104 may be a question-answer system, or chatbot, user interface (e.g., the user interface 104 facilitates communication with the language model 106 used for question-answer, or chatbot, functionality). As referred to herein, a "machine learning language model" or "language model" may comprise a computational system designed to understand and generate human language through learning patterns in vast amounts of training data, such as books, websites, and other sources. The trained model may be able to predict and produce coherent and contextually relevant text based on input it receives. In some examples, the language model 106 may include a large language model (LLM), a transformer model, a generative pre-trained transformer (GPT) model, or another type of generative model.

In connection with use of the language model 106 (e.g., a question-answer session, a chat session, or the like), text may be entered into the user interface 104, and the system 108 may obtain (e.g., receive), via the user interface 104, an input indicating a prompt 110 (e.g., the entered text) for the language model 106. "Prompt" may refer to any text input to the language model 106 intended to produce a response from the language model 106. The prompt 110 may indicate a question (e.g., "will may account be closed after a period of inactivity?"). In some embodiments, the prompt 110 may be an evaluation prompt designed for evaluating the language model 106. The prompt 110 may request a binary response from the language model 106. A "binary response" may refer to a response of the language model 106 that can be one of only two options (e.g., "yes" or "no," "true" or "false," etc.). For example, the prompt 110 may include a question that can be answered as a binary response. In other examples, the prompt 110 may include a question that cannot be answered as a binary response.

Based on receiving the input, the system 108 may determine a classification of the prompt 110 as a first prompt type that requests binary response (e.g., a question that can be answered as a binary response, such as "will may account be closed after a period of inactivity?") or as a second prompt type that requests nonbinary response (e.g., a question that cannot be answered as a binary response, such as "what is the credit limit for my account?"). The system 108 may determine the classification using a classification model 112. For example, the system 108 may provide the prompt 110 to the classification model 112 as input, and the classification model 112 may output a classification of the prompt 110 as the first prompt type or the second prompt type. The classification model 112 may be trained to classify prompt types by leveraging the presence of specific keywords (e.g., "is," "are," "can," "does"), syntactic structures, and question patterns. During training, the classification model 112 may be fed a labeled dataset containing examples of both types of prompts. The training process may involve using supervised learning techniques where the model learns to identify patterns and features that differentiate the two types of prompts. Techniques like tokenization, embedding layers, and attention mechanisms may be employed to capture the nuances of the two types of prompts. In some embodiments, the system 108 may determine the classification by scanning the prompt 110 for specific keywords and phrases. For example, prompts containing words like "is," "are," "can," or "does" are likely to be requesting binary response, as they typically require a "yes" or "no" answer. In contrast, prompts lacking these keywords or containing open-ended words like "how," "why," or "describe" are more likely to require nonbinary response.

In some examples, the system 108 may modify the prompt 110 before it is provided to the language model 106. For example, the system 108 may modify the prompt 110 based on the classification of the prompt 110 as the first prompt type. As one example, the system 108 may modify the prompt 110 to append to the prompt 110 a request for the reasoning of the language model 106 (e.g., append "explain your reasoning" to the end of the prompt 110). As another example, the system 108 may modify the prompt 110 to append to the prompt 110 a request for a binary response (e.g., append "provide only a yes or no answer" to the end of the prompt 110).

The system 108 may obtain multiple responses 114 of the language model 106 to the prompt 110. For example, the system 108 may obtain the multiple responses 114 based on the classification of the prompt 110 as the first prompt type. Thus, by performing an initial classification of the prompt 110, computational resources associated with generating the responses 114 are focused on outputs that include binary responses, thereby utilizing the computational resources more efficiently and effectively. In some examples, the system 108 may generate, using the language model 106, the multiple responses 114. In other examples, the multiple responses 114 may have been previously generated and stored, and the system 108 may retrieve the responses 114 from storage. To obtain (e.g., generate) the responses, the system 108 may input the prompt 110 to the language model 106 multiple times, and obtain the responses 114 from the corresponding multiple outputs of the language model 106.

The responses 114 may be sampled from the probability distribution of the language model 106. The probability distribution represents the likelihood of each possible next word or token in a sequence given the preceding context. In sampling from the probability distribution, different words or tokens may be selected from the probability distribution based on the probabilities assigned to each possible option each time the prompt 110 is inputted to the language model 106. In some examples, the system 108 may perform temperature sampling of the language model 106 to obtain the multiple responses 114. Here, the system 108 may adjust a temperature parameter of the language model 106 (e.g., to a higher value to thereby increase the randomness of the sampling), and then input the prompt 110 to the language model 106 multiple times.

Each response 114 may include a binary response portion 114a and/or a reasoning portion 114b. "Binary response portion" may refer to text in a response that is one of only two options responding to the prompt 110. For example, the binary response portion 114a indicates the binary response to the prompt 110 (e.g., an answer to the prompt 110 as a binary output). For example, the binary response portion 114a may contain "yes" or "no," "true" or "false," etc. "Reasoning portion" may refer to text in a response providing reasoning for the binary response portion. For example, the reasoning portion 114b indicates the reasoning of the language model 106 as to why it responded with the binary response (e.g., the reasoning why the language model 106 provided a "yes" answer or a "no" answer).

The system 108 may determine an uncertainty quantification for the language model 106 based on the responses 114. In some examples, the system 108 may determine an uncertainty quantification based on variations across the reasoning portions 114b of the multiple responses 114. Additionally, or alternatively, the system 108 may determine an uncertainty quantification for the language model 106 based on a variation in binary option confidences in a binary response portion 114a of one or more responses 114. The "binary option confidences" may refer to the confidence scores (e.g., logits) computed by the language model 106 for each of the two binary options. An "uncertainty quantification" provides a measurement that quantifies the degree of uncertainty or certainty in the language model's outputs. The uncertainty quantification provides a numerical value (or other value) that reflects how confident or uncertain the language model is about its outputs. The uncertainty quantification thus provides insight into the reliability of the language model's outputs. By using variations in reasoning and/or variations in binary option confidences to estimate uncertainty, rather than directly using a content of an output, the underlying decision-making processes or reasoning of the language model 106 is captured in the uncertainty quantification, thereby producing more accurate and consistent uncertainty estimation.

The system 108 may output content based on the uncertainty quantification. For example, the content may include the uncertainty quantification, may include an indication of certainty or uncertainty, and/or may include a certainty flag and/or an uncertainty flag on one or more of the responses 114 (e.g., the flag indicating that the responses 114 should be reviewed for reliability). As an example, an output of the uncertainty quantification, the indication of certainty or uncertainty, and/or the certainty or uncertainty flag may be used when the system 108 is being used to evaluate the language model 106 (e.g., the system 108 may act as an LLM judge).

In some embodiments, the system 108 may cause outputting of at least the binary response portion 114a of one of the responses 114 in the user interface 104 based on the uncertainty quantification indicating certainty in the multiple responses 114. For example, the uncertainty quantification may indicate certainty if the uncertainty quantification satisfies a threshold (e.g., is less than the threshold if the uncertainty quantification indicates a degree of uncertainty, or is greater than the threshold if the uncertainty quantification indicates a degree of certainty). In some examples, the system 108 may cause outputting of the binary response portion 114a and the reasoning portion 114b of the response 114. Where there is certainty, the binary response portion 114a of the multiple responses 114 should be the same, and therefore the system 108 may select any of the responses 114 to output. Based on the uncertainty quantification indicating uncertainty in the multiple responses 114 (e.g., the uncertainty quantification does not satisfy the threshold), the system 108 may cause outputting in the user interface 104 of an uncertainty indication (e.g., "I don't know" or "Please check this response for accuracy"), outputting of a recommendation to revise the prompt 110, outputting of one or more links to resources containing information relevant to the prompt 110, or the like.

In some embodiments, to output the content, the system 108 may generate the content (e.g., using the language model 106 or a different language model) or may select the content from a content library. In some embodiments, the system 108 may cause outputting of the content to the user interface 104. For example, the system 108 may transmit the content to the user device 102 to cause the user device 102 to display the content in the user interface 104. The system 108 may transmit the content to the user device 102 in an HTTP response, in an API response, or the like.

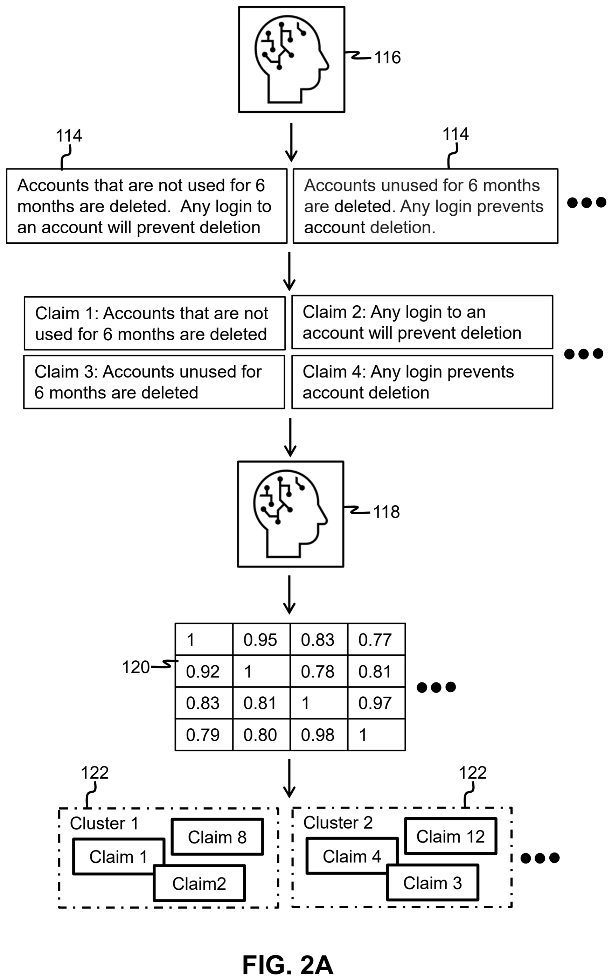

FIG. 2A shows an illustrative diagram for determining an uncertainty quantification for the language model 106, in accordance with one or more embodiments. In particular, Fig. 2A shows an example of determining an uncertainty quantification for the language model 106 based on one or more responses 114. The example of Fig. 2A may show a reasoning-based approach for uncertainty quantification.

The system 108 first may extract reasoning portions 114b from multiple responses 114. The system 108 may extract the reasoning portions 114b from the responses 114 using a machine learning model 116. For example, the system 108 may input the reasoning portions 114b into the model 116, and the system 108 may obtain the reasoning portions 114b from outputs of the model 116. The model 116 may be a language model. The model 116 may be a supervised learning model trained on annotated response data where reasoning portions are labeled. Thus, the model 116 can learn to recognize and extract similar portions from new responses. The model 116 may be based on a technique like sequence labeling, which can be used to capture the context and dependencies within text to accurately identify reasoning components. Additionally, or alternatively, the model 116 may employ clustering to extract reasoning portions 114b from the responses 114. Here, the model 116 may process the responses 114 to identify and segment distinct reasoning components. This may be achieved using natural language processing (NLP) techniques including dependency parsing and semantic role labeling to understand the structure and meaning of text. The model 116 can apply clustering algorithms to group similar reasoning portions together. The model 116 can also evaluate the quality and relevance of these clusters using metrics like coherence and informativeness, to thereby validate that the extracted reasoning portions are accurate. Additionally, or alternatively, the system 108 may employ a rule-based approach to extract reasoning portions 114b from the responses 114 by processing the responses 114 applying linguistic rules and/or patterns. For example, the system 108 may use keywords or phrases indicative of reasoning, such as "because," "therefore," etc., to extract the reasoning portions 114b.

The system 108 may then decompose each of the reasoning portions 114b into one or more claims. A "claim" may include a part of a reasoning portion 114b that includes a statement that makes an assertion. Thus, a reasoning portion 114b that contains multiple statements or assertions may be decomposed into multiple claims. The system 108 may use NLP techniques, such as dependency parsing and/or semantic role labeling, to identify claims within each reasoning portion 114b. For example, by breaking down complex sentences into simpler components, the system 108 can isolate individual claims that represent distinct assertions. This process may involve identifying key elements like subjects, predicates, and objects, and then rephrasing or segmenting the text to clearly delineate each claim.

The system 108 may determine pairwise entailment probabilities for each pair of the multiple claims that are identified (e.g., from different reasoning portions 114b). A pairwise entailment probability provides a measurement of a degree by which one claim logically supports or contradicts another claim. Thus, claims strongly entailing each other suggests more certainty in the responses 114, and claims contradicting each other indicates greater uncertainty in the responses 114. To determine (e.g., compute) the pairwise entailment probabilities, the system 108 may use a model 118 trained on natural language interference (NLI) tasks. For example, the model 118 may be configured to evaluate the logical relationship between pairs of claims, and to determine whether one claim entails, contradicts, or is neutral with respect to the other claim. As an example, for each pair of claims, the model 118 may output a probability distribution over an entailment class, a contradiction class, and a neutral class. The pairwise entailment probability for a given pair of claims may represent the probability for the entailment class. In some examples, the pairwise entailment probability for a given pair of claims may represent the probability for the contradiction class. Accordingly, "pairwise entailment probability" may refer to an entailment probability or a contradiction probability, as both may provide measurements of consistency within the claims.

The system 108 may construct a matrix 120 using the determined pairwise entailment probabilities. Each cell of the matrix 120 may represent entailment between a pair of the claims. For example, the entailment may be represented as an entailment probability or a contradiction probability. The matrix 120 may be an *n* × n matrix, where *n* represents the number of claims identified across the responses 114. The system 108 may perform, using the matrix 120, a clustering of the claims into one or more reasoning groups 122. The system 108 may apply a clustering algorithm to cluster the claims. For example, the system 108 may apply a clustering algorithm, such as hierarchical clustering, spectral clustering, or K-means clustering, to the matrix 120 to group claims that have high entailment probabilities with each other, indicating they belong to the same reasoning group 122. Thus, the clustering may organize the claims into distinct reasoning groups 122 that reflect the underlying logical structure of the reasoning in the responses 114.

The system 108 may determine uncertainty quantification for the language model 106 based on the clustering of the claims into the reasoning groups 122. For example, the system 108 may determine the uncertainty quantification based on a network density of the reasoning groups 122. For example, a dense network may indicate greater certainty, whereas a sparse network may indicate lesser certainty. As an example, the system 108 may analyze relationships within clusters and/or between different clusters based on cross-cluster connections, and the uncertainty quantification may be based on the relationships within clusters and/or between clusters. For example, a dense cluster, where many claims support each other, indicates high consistency and confidence in the model's reasoning, suggesting lower uncertainty. In contrast, a sparse cluster, with fewer connections between claims, reflects greater variability and less support among the claims, indicating higher uncertainty. As another example, a highly interconnected network indicating high consistency may have many cross-cluster connections, whereas a sparsely connected network indicating greater variability may have fewer cross-cluster connections. Thus, the uncertainty quantification may be a function of cluster density and/or network density. In some examples, the system 108 may employ a graph-based analysis to determine the uncertainty quantification. For example, the system 108 may construct a graph (e.g., based on the reasoning groups 122) where nodes represent individual claims and edges represent the pairwise entailment probabilities between the claims. A dense graph (where many nodes are interconnected) indicates high consistency and confidence in the model's reasoning, as multiple claims support each other. Conversely, a sparse graph (with fewer connections) suggests greater uncertainty, as there are fewer reinforcing claims. Thus, the uncertainty quantification may be a function of node interconnections in the graph.

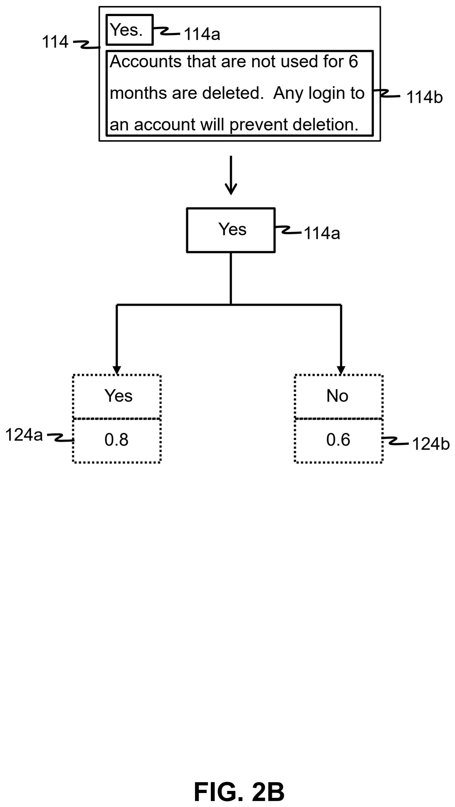

FIG. 2B shows an illustrative diagram for determining an uncertainty quantification for the language model 106, in accordance with one or more embodiments. In particular, Fig. 2B shows an example of determining an uncertainty quantification for the language model 106 based on one or more responses 114. The example of Fig. 2B may show a probability-based approach for uncertainty quantification.

In some examples, the system 108 may identify a binary response portion 114a of a response 114. To do so, the system 108 may identify an initial output token of the response 114. For example, a response 114 may be, "Yes, our stores are only closed on holidays," and thus, the binary response portion 114a ("Yes") may correspond to the initial output token of the response 114. Additionally, or alternatively, the system 108 may employ a rule-based approach to identifying the binary response portion 114a using specific keywords ("yes," "no," "true," false," etc.) and/or may employ a machine learning model to identify the binary response portion 114a.

The system 108 may retrieve, for the binary response portion 114a, a first logit 124a corresponding to a first binary option (e.g., "yes") and a second logit 124b corresponding to a second binary option (e.g., "no"). For example, the system 108 may retrieve the first logit 124a and the second logit 124b for respective tokens representing the first binary option and the second binary option for the initial output token. "Logit" refers to the raw, unnormalized score assigned by the language model 106 to a token (e.g., before applying a softmax function converting the logit into a probability). "Token" refers to a unit of text, such as a word, subword, or character, that the language model 106 may process as a single entity during text generation.

The system 108 may then compare a difference (i.e., a difference in value) between the first logit 124a and the second logit 124b. The system 108 may perform this retrieval and comparing for a single response 114 or for multiple responses. The system 108 may determine the uncertainty quantification based on the difference between the first logit 124a and the second logit 124b (e.g., for a single response 114). In some examples, the system 108 may determine the uncertainty quantification based on differences between first logits and second logits for binary response portions 114a of multiple responses 114 (e.g., based on a distribution or variation in the differences). For example, the system 108 may determine the uncertainty quantification as the average of the differences. In some embodiments, the system 108 may determine the uncertainty quantification by retrieving and comparing a different metric, such as probabilities associated with the first logit 124a and the second logit 124b after applying a softmax function.

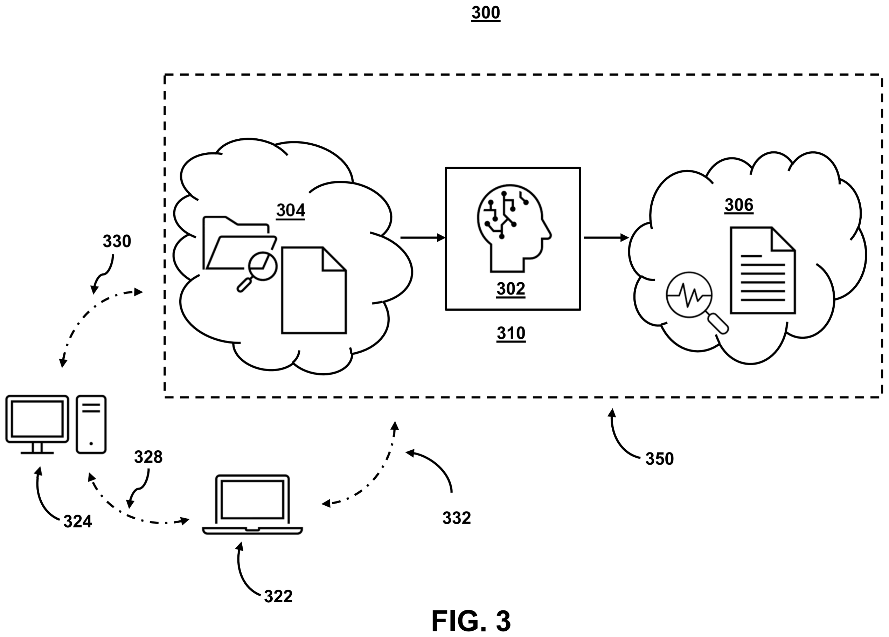

FIG. 3 shows illustrative components for a system used to detect certainty or uncertainty in language model outputs, in accordance with one or more embodiments. For example, FIG. 3 may show illustrative components for generating reliable language model outputs using uncertainty quantification. As shown in FIG. 3, system 300 may include mobile device 322 and user terminal 324. While shown as a laptop computer and personal computer, respectively, in FIG. 3, it should be noted that mobile device 322 and user terminal 324 may be any computing device, including, but not limited to, a smartphone, a tablet computer, a handheld computer, and other computer equipment (e.g., a server), including "smart," wireless, wearable, and/or mobile devices. FIG. 3 also includes cloud components 310. Cloud components 310 may alternatively be any computing device as described above, and may include any type of mobile terminal, fixed terminal, or other device. For example, cloud components 310 may be implemented as a cloud computing system, and may feature one or more component devices. It should also be noted that system 300 is not limited to three devices. Users may, for instance, utilize one or more devices to interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Cloud components 310 may include the system 108. Cloud components 310 may access one or more databases storing previously generated responses 114 of the language model 106. Cloud components 310 may include model 302, which may be a machine learning model, artificial intelligence model, etc. (which may be referred collectively as "models" herein). Model 302 may take inputs 304 and provide outputs 306. The inputs may include multiple datasets, such as a training dataset and a test dataset. Each of the plurality of datasets (e.g., inputs 304) may include data subsets related to user data, predicted forecasts and/or errors, and/or actual forecasts and/or errors. In some embodiments, outputs 306 may be fed back to model 302 as input to train model 302 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input. The system may then train the first machine learning model to classify the first labeled feature input with the known prediction (e.g., contextually relevant text).

In a variety of embodiments, model 302 may update its configurations (e.g., weights, biases, or other parameters) based on the assessment of its prediction (e.g., outputs 306) and reference feedback information (e.g., user indication of accuracy, reference labels, or other information). In a variety of embodiments, where model 302 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 302 may be trained to generate better predictions.

In some embodiments, model 302 may include an artificial neural network. In such embodiments, model 302 may include an input layer and one or more hidden layers. Each neural unit of model 302 may be connected with many other neural units of model 302. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. Model 302 may be self-learning and trained, rather than explicitly programmed, and can perform significantly better in certain areas of problem solving, as compared to traditional computer programs. During training, an output layer of model 302 may correspond to a classification of model 302, and an input known to correspond to that classification may be input into an input layer of model 302 during training. During testing, an input without a known classification may be input into the input layer, and a determined classification may be output.

In some embodiments, model 302 may include multiple layers (e.g., where a signal path traverses from front layers to back layers). In some embodiments, back propagation techniques may be utilized by model 302 where forward stimulation is used to reset weights on the "front" neural units. In some embodiments, stimulation and inhibition for model 302 may be more free-flowing, with connections interacting in a more chaotic and complex fashion. During testing, an output layer of model 302 may indicate whether or not a given input corresponds to a classification of model 302 (e.g., certainty or uncertainty).

In some embodiments, the model (e.g., model 302) may automatically perform actions based on outputs 306. In some embodiments, the model (e.g., model 302) may not perform any actions. The output of the model (e.g., model 302) may be used to select a response to output in a user interface, modify a response to include an uncertainty indication, modify a response to include a recommendation to revise a prompt, or the like.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

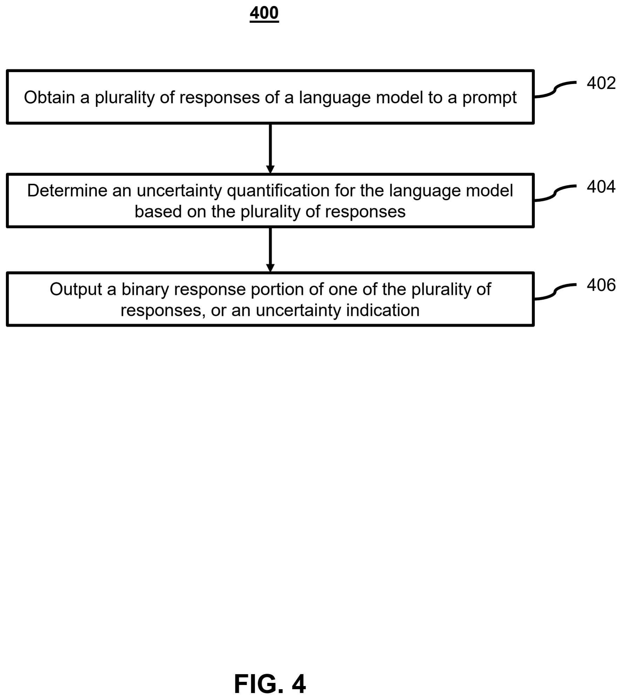

FIG. 4 shows a flowchart of the steps involved in detecting certainty or uncertainty in language model outputs, in accordance with one or more embodiments. For example, the system may use process 400 (e.g., as implemented on one or more system components described above) in order to generate reliable language model outputs using uncertainty quantification.

At step 402, process 400 (e.g., using one or more components described above) may include obtaining a plurality of responses of a language model to a prompt. For example, the system (e.g., system 108 (FIG. 1)) may obtain a plurality of responses (e.g., responses 114 (FIG. 1)) of a language model (e.g., language model 106 (FIG. 1)) to a prompt (e.g., prompt 110 (FIG. 1)), where each of the plurality of responses includes a binary response portion (e.g., binary response portion 114a (FIG. 1)) and a reasoning portion (e.g., reasoning portion 114b (FIG. 1)). The prompt may be designed for evaluation of the language model, or may be a prompt provided by a user. The system may obtain the plurality of responses by inputting the prompt to the language model multiple times, and obtaining the plurality of responses from the outputs of the language model. For example, the system may adjust a temperature parameter of the language model, and input the prompt to the language model multiple times. Obtaining the plurality of responses allows for a more comprehensive analysis of the language model's behavior, capturing the variability and consistency in the language model's reasoning. Thus, the plurality of responses provide a rich dataset for evaluating the language model's certainty or uncertainty.

In some embodiments, process 400 may include determining a classification of the prompt. For example, the system may determine, using a classification model (e.g., classification model 112 (FIG. 1)) a classification of the prompt as a first prompt type that requests binary response (e.g., a "yes" or "no" answer) or as a second prompt type that requests nonbinary response. Thus, in some examples, the system may obtain the plurality of responses based on the classification of the prompt as the first prompt type. For example, the uncertainty quantification techniques described herein may be used for outputs of the language model that include binary responses. By performing an initial classification of the prompt, computational resources associated with generating the plurality of responses are focused on outputs that include binary responses, thereby utilizing the computational resources more efficiently and effectively.

At step 404, process 400 (e.g., using one or more components described above) may include determining an uncertainty quantification for the language model based on the plurality of responses. For example, the system may determine the uncertainty quantification for the language model based on the responses and based on variations across reasoning portions of the plurality of responses, and/or variations in binary option confidences in binary response portions of the plurality of responses. By using variations in reasoning and/or variations in binary option confidences to estimate uncertainty, rather than directly using a content of an output, the underlying decision-making processes or reasoning of the language model is captured in the uncertainty characterization, thereby producing more accurate and consistent uncertainty estimation.

In some embodiments, determining the uncertainty quantification may include determining the uncertainty quantification based on variations across reasoning portions of the plurality of responses. For example, the system may first extract reasoning portions from the plurality of responses. To extract the reasoning portions, the system may input the reasoning portions into a different language model (e.g., model 116 (FIG. 2A)), and obtain the reasoning portions from the outputs of the different language model. Extracting the reasoning portions allows for a more focused and detailed analysis of the language model's decision-making process, enhancing the accuracy of uncertainty quantification by isolating the factors contributing to the language model's certainty or uncertainty.

The system may decompose each of the reasoning portions into one or more claims to obtain a plurality of claims, determine pairwise entailment probabilities for each pair of the plurality of claims, and construct a matrix using the pairwise entailment probabilities (e.g., where each cell of the matrix represents similarity between a pair of the plurality of claims). Doing so provides an evaluation of the logical coherence of the language model's reasoning, thereby enhancing the precision of uncertainty quantification. The system may perform, using the matrix, a clustering of the plurality of claims into one or more reasoning groups, and determine the uncertainty quantification based on the clustering of the plurality of claims into the one or more reasoning groups. For example, determining the uncertainty quantification may include determining the uncertainty quantification based on a network density of the clustering of the plurality of claims into the one or more reasoning groups. Clustering the claims indicates density or sparsity among the reasoning groups, whereby more dense clustering indicates more certainty in the language model and more sparse clustering indicates more uncertainty in the language model. In this way, the clustering enables efficient, accurate, and consistent determination of uncertainty.

In some embodiments, determining the uncertainty quantification may include determining the uncertainty quantification based on variations in binary option confidences in binary response portions of the plurality of responses. For example, the system may retrieve, for the binary response portion of a response of the plurality of responses, a first logit corresponding to a first binary option (e.g., "yes") and a second logit corresponding to a second binary option (e.g., "no"). To retrieve the first logit and the second logit, the system may identify an initial output token of the response, and retrieve the first logit and the second logit for respective tokens representing the first binary option and the second binary option for the initial output token. Retrieving the first logit and the second logit from the initial output token provides focus on a binary response portion of the response, enhancing the accuracy of uncertainty quantification by isolating the factors contributing to the language model's certainty or uncertainty. The system may compare a difference between the first logit and the second logit, and the system may determine the uncertainty quantification based on a difference between the first logit and the second logit (or differences between first logits and second logits for the binary response portions of the plurality of responses). By doing so, the system may utilize the underlying decision-making processes of the language model for uncertainty quantification, thereby facilitating more efficient, accurate, and consistent determination of uncertainty.

At step 406, process 400 (e.g., using one or more components described above) may include outputting the binary response portion of one of the plurality of responses, or an uncertainty indication. For example, the system may output the binary response portion of one of the plurality of responses based on the uncertainty quantification indicating certainty in the plurality of responses, or output an uncertainty indication based on the uncertainty quantification indicating uncertainty in the plurality of responses. As an example, based on the uncertainty quantification indicating certainty, the binary response portion (e.g., a "yes" or "no" answer) may be output to a user interface, such as a user interface associated with a question-and-answer system or a chatbot system. As another example, based on the uncertainty quantification indicating uncertainty, the uncertainty indication (e.g., "I don't know") may be output to the user interface. In this way, highly reliable outputs of the language model may be returned, while less reliable outputs of the language model may be suppressed or replaced, thereby improving an overall reliability of the outputs of the language model.

In some embodiments, process 400 may include comparing the uncertainty quantification to a threshold indicating whether the uncertainty quantification indicates certainty or uncertainty. For example, the system may output the binary response portion based on a comparison of the uncertainty quantification to the threshold indicating certainty. As another example, the system may output the uncertainty indication based on a comparison of the uncertainty quantification to the threshold indicating uncertainty. The system may use adjustments to the threshold to dynamically adjust how much uncertainty is allowed in a response based on factors like prompt/response subject matter (e.g., medical subject matter may use a high degree of certainty) or user-preference for certainty. By doing so, the system can selectively reduce or increase the certainty of the language model's outputs.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods. Examples described herein are for purposes of illustration and may not reflect actual policies.

The present techniques will be better understood with reference to the following enumerated embodiments:
1. A method for generating reliable language model outputs using uncertainty quantification
2. The method of embodiment 1 comprising: obtaining, by a device, a plurality of responses of a language model to a prompt, wherein each of the plurality of responses comprises a binary response portion and a reasoning portion; determining, by the device, an uncertainty quantification for the language model based on the plurality of responses, wherein the uncertainty quantification is based on: variations across reasoning portions of the plurality of responses, or variations in binary option confidences in binary response portions of the plurality of responses; and outputting the binary response portion of one of the plurality of responses based on the uncertainty quantification indicating certainty in the plurality of responses, or an uncertainty indication based on the uncertainty quantification indicating uncertainty in the plurality of responses.
3. The method of embodiment 2, further comprising: determining, using a classification model, a classification of the prompt for the language model as a first prompt type that requests binary response or as a second prompt type that requests nonbinary response.
4. The method of embodiment 3, wherein obtaining the plurality of responses of the language model to the prompt comprises: obtaining the plurality of responses based on the classification of the prompt as the first prompt type.
5. The method of any of embodiments 2-4, wherein obtaining the plurality of responses of the language model to the prompt comprises: inputting the prompt to the language model multiple times; and obtaining the plurality of responses from outputs of the language model.
6. The method of embodiment 5, wherein inputting the prompt to the language model the multiple times comprises: adjusting a temperature parameter of the language model; and inputting the prompt to the language model the multiple times.
7. The method of any of embodiments 2-6, further comprising: comparing the uncertainty quantification to a threshold indicating whether the uncertainty quantification indicates certainty or uncertainty in the plurality of responses.
8. The method of embodiment 7, wherein outputting the binary response portion or the uncertainty indication comprises: outputting the binary response portion based on comparing the uncertainty quantification to the threshold indicating certainty in the plurality of responses.
9. The method of embodiment 7, wherein outputting the binary response portion or the uncertainty indication comprises: outputting the uncertainty indication based on comparing the uncertainty quantification to the threshold indicating uncertainty in the plurality of responses.
10. The method of any of embodiments 2-9, wherein determining the uncertainty quantification comprises: determining the uncertainty quantification based on variations across reasoning portions of the plurality of responses.
11. The method of any of embodiments 2-10, wherein determining the uncertainty quantification comprises: determining the uncertainty quantification based on variations in binary option confidences in binary response portions of the plurality of responses.
12. The method of any of embodiments 2-11, wherein determining the uncertainty quantification comprises: extracting reasoning portions from the plurality of responses; decomposing each of the reasoning portions into one or more claims to obtain a plurality of claims; determining pairwise entailment probabilities for each pair of the plurality of claims; constructing a matrix using the pairwise entailment probabilities, wherein each cell of the matrix represents entailment between a pair of the plurality of claims; performing, using the matrix, a clustering of the plurality of claims into one or more reasoning groups; and determining the uncertainty quantification based on the clustering of the plurality of claims into the one or more reasoning groups.
13. The method of embodiment 12, wherein extracting the reasoning portions from the plurality of responses comprises: inputting the reasoning portions into a different language model; and obtaining the reasoning portions from outputs of the different language model.
14. The method of any of embodiments 12-13, wherein determining the uncertainty quantification based on the clustering comprises: determining the uncertainty quantification based on a network density of the clustering of the plurality of claims into the one or more reasoning groups.
15. The method of any of embodiments 2-11, wherein determining the uncertainty quantification comprises: retrieving, for the binary response portion of a response of the plurality of responses, a first logit corresponding to a first binary option and a second logit corresponding to a second binary option; comparing a difference between the first logit and the second logit; and determining the uncertainty quantification based on differences between first logits and second logits for the binary response portions of the plurality of responses.
16. The method of embodiment 15, wherein retrieving the first logit and the second logit comprises: identifying an initial output token of the response; and retrieving the first logit and the second logit for respective tokens representing the first binary option and the second binary option for the initial output token.
17. One or more non-transitory, computer-readable mediums storing instructions that, when executed by a data processing apparatus, cause the data processing apparatus to perform operations comprising those of any of embodiments 1-16.
18. A system comprising one or more processors; and memory storing instructions that, when executed by the processors, cause the processors to effectuate operations comprising those of any of embodiments 1-16.
19. A system comprising means for performing any of embodiments 1-16.

## Claims

1. A system for generating reliable language model outputs using uncertainty quantification, the system comprising:
one or more memories; and
one or more processors, communicatively coupled to the one or more memories, configured to:
receive, from a user device via a user interface, an input indicating a prompt for a language model;
determine, using a classification model, a classification of the prompt as a first prompt type that requests binary response or as a second prompt type that requests nonbinary response;
generate, based on the classification of the prompt as the first prompt type, a plurality of responses to the prompt sampled from a probability distribution of the language model,
wherein each of the plurality of responses comprises a binary response portion and a reasoning portion;
extract reasoning portions from the plurality of responses;
decompose each of the reasoning portions into one or more claims to obtain a plurality of claims;
determine pairwise entailment probabilities for each pair of the plurality of claims;
construct a matrix using the pairwise entailment probabilities,
wherein each cell of the matrix represents entailment between a pair of the plurality of claims;
perform, using the matrix, a clustering of the plurality of claims into one or more reasoning groups;
determine an uncertainty quantification for the language model based on the clustering of the plurality of claims into the one or more reasoning groups; and
cause, based on the uncertainty quantification indicating certainty in the plurality of responses, outputting of at least the binary response portion of one of the plurality of responses in the user interface.

2. A method for generating reliable language model outputs using uncertainty quantification, the method comprising:
obtaining, by a device, a plurality of responses of a language model to a prompt,
wherein each of the plurality of responses comprises a binary response portion and a reasoning portion;
determining, by the device, an uncertainty quantification for the language model based on the plurality of responses,
wherein the uncertainty quantification is based on:
variations across reasoning portions of the plurality of responses, or
variations in binary option confidences in binary response portions of
the plurality of responses; and
outputting the binary response portion of one of the plurality of responses based on the uncertainty quantification indicating certainty in the plurality of responses, or an uncertainty indication based on the uncertainty quantification indicating uncertainty in the plurality of responses.

3. The method of claim 2, further comprising:
determining, using a classification model, a classification of the prompt for the language model as a first prompt type that requests binary response or as a second prompt type that requests nonbinary response;
wherein, optionally, obtaining the plurality of responses of the language model to the prompt comprises: obtaining the plurality of responses based on the classification of the prompt as the first prompt type.

4. The method of claim 2 or 3, wherein obtaining the plurality of responses of the language model to the prompt comprises:
inputting the prompt to the language model multiple times; and
obtaining the plurality of responses from outputs of the language model.
wherein, optionally, inputting the prompt to the language model the multiple times comprises: adjusting a temperature parameter of the language model, and inputting the prompt to the language model the multiple times.

5. The method of any one of claims 2 to 4, further comprising:
comparing the uncertainty quantification to a threshold indicating whether the uncertainty quantification indicates certainty or uncertainty in the plurality of responses.

6. The method of claim 5, wherein outputting the binary response portion or the uncertainty indication comprises:
(a) outputting the binary response portion based on comparing the uncertainty quantification to the threshold indicating certainty in the plurality of responses; and/or
(b) outputting the uncertainty indication based on comparing the uncertainty quantification to the threshold indicating uncertainty in the plurality of responses.

7. The method of any one of claims 2 to 6, wherein determining the uncertainty quantification comprises:
(a) determining the uncertainty quantification based on variations across reasoning portions of the plurality of responses; and/or
(b) determining the uncertainty quantification based on variations in binary option confidences in binary response portions of the plurality of responses.

8. The method of any one of claims 2 to 7, wherein determining the uncertainty quantification comprises:
extracting reasoning portions from the plurality of responses;
decomposing each of the reasoning portions into one or more claims to obtain a plurality of claims;
determining pairwise entailment probabilities for each pair of the plurality of claims;
constructing a matrix using the pairwise entailment probabilities,
wherein each cell of the matrix represents entailment between a pair of the plurality of claims;
performing, using the matrix, a clustering of the plurality of claims into one or more reasoning groups; and
determining the uncertainty quantification based on the clustering of the plurality of claims into the one or more reasoning groups.

9. The method of claim 8, wherein extracting the reasoning portions from the plurality of responses comprises:
inputting the reasoning portions into a different language model; and
obtaining the reasoning portions from outputs of the different language model.

10. The method of claim 8 or 9, wherein determining the uncertainty quantification based on the clustering comprises:
determining the uncertainty quantification based on a network density of the clustering of the plurality of claims into the one or more reasoning groups.

11. The method of any one of claims 2 to 10, wherein determining the uncertainty quantification comprises:
retrieving, for the binary response portion of a response of the plurality of responses, a first logit corresponding to a first binary option and a second logit corresponding to a second binary option;
comparing a difference between the first logit and the second logit; and
determining the uncertainty quantification based on differences between first logits and second logits for the binary response portions of the plurality of responses;
wherein, optionally, retrieving the first logit and the second logit comprises: identifying an initial output token of the response, and retrieving the first logit and the second logit for respective tokens representing the first binary option and the second binary option for the initial output token.

12. A non-transitory, computer-readable medium, comprising instructions that, when executed by one or more processors, cause operations comprising:
obtaining one or more responses of a language model to a prompt,
wherein each of the one or more responses comprises at least one of a binary response portion or a reasoning portion;
determining an uncertainty quantification for the language model based on the one or more responses,
wherein the uncertainty quantification is based on:
variations across reasoning portions of the one or more responses, or
variations in binary option confidences in binary response portions of
the one or more responses; and
outputting content based on the uncertainty quantification.

13. The non-transitory, computer-readable medium of claim 12, wherein determining the uncertainty quantification comprises:
extracting reasoning portions from the one or more responses;
decomposing each of the reasoning portions into one or more claims to obtain a plurality of claims;
determining pairwise entailment probabilities for each pair of the plurality of claims;
constructing a matrix using the pairwise entailment probabilities,
wherein each cell of the matrix represents entailment between a pair of the plurality of claims;
performing, using the matrix, a clustering of the plurality of claims into one or more reasoning groups; and
determining the uncertainty quantification based on the clustering of the plurality of claims into the one or more reasoning groups.

14. The non-transitory, computer-readable medium of claim 13, wherein determining the uncertainty quantification based on the clustering comprises:
determining the uncertainty quantification based on a network density of the clustering of the plurality of claims into the one or more reasoning groups.

15. The non-transitory, computer-readable medium of any one of claims 12 to 14, wherein determining the uncertainty quantification comprises:
retrieving, for the binary response portion of a response of the one or more responses, a first logit corresponding to a first binary option and a second logit corresponding to a second binary option;
comparing a difference between the first logit and the second logit; and
determining the uncertainty quantification based on the difference between the first logit and the second logit.
